# EUROPÄISCHE PATENTANMELDUNG

(11) **EP 2 230 064 A1**
(43) Veröffentlichungstag der Anmeldung: **22.09.2010**
(21) Anmeldenummer: 10002442.1
(22) Anmeldetag: 09.03.2010
(51) Int. Cl.: B29C 47/08

(54) **Doppelschneckenextruder für keramische Masse**

(30) Priorität: 16.03.2009 DE 102009013386
(71) Anmelder: Rieter-Werke GmbH, 78467 Konstanz (DE)
(72) Erfinder: Kohl, Robert, 97640 Stockheim (DE)
(74) Vertreter: Schmid, Nils T.F.

(57) **Zusammenfassung**

Bei einem Doppelschneckenextruder für keramische Masse mit einem Rumpf (5), der eine Einfüllöffnung (19) für die zu extrudierende Masse in den Doppelschneckenextruder definiert, zwei drehbar gelagerten, zueinander parallelen Schneckenwellen (23,25) und einem Druckgehäuse (41), das sich von dem Rumpf in Extrudierrichtung (E) weg erstreckt, in einen Presskopf (43) zur Abgabe der Masse mündet und einen mit der Einfüllöffnung (19) in Verbindung stehenden Innenraum zur Aufnahme der Schneckenwellen (23,25) begrenzt, wobei die Masse über die Einfüllöffnung (19) in den Innenraum gelangt, ist vorgesehen, dass der Innenraum zumindest auf einem Teil der Erstreckung des Druckgehäuses längs der Extrudierrichtung (E) in zwei separate Extrudierabteile (51,53) zur Aufnahme jeweils einer Schneckenwelle (23,25) aufgeteilt ist, so dass zumindest längs der separaten Extrudierabteile (51,53) zwei separate Massenstränge gebildet sind.

## Beschreibung

Die Erfindung betrifft einen Doppelschneckenextruder für keramische Massen, insbesondere für Baukeramik. Ein solcher Doppelschneckenextruder ist Teil einer Fertigungslinie zum Formen von beispielsweise Dachziegel und Mauerwerksformlingen, welche anschließend zur Aushärtung getrocknet und/oder gebrannt werden.

Ein Doppelschneckenextruder für keramische Massen ist aus DE 196 14 037 A1 bekannt. Der Doppelschneckenextruder hat einen Basisrumpf, an dem ein Keramikausgangsmaterial, wie Ton, für die Extrusion zugeführt wird, sich ein Extrudergehäuse anschließt, das im technischen Sprachgebrauch Zylinder genannt ist und im Folgenden Druckgehäuse des Doppelschneckenextruders genannt wird, und zwei parallele Schneckenwellen drehbar gelagert sind. Der Rumpf ist stabil ausgeführt und fest mit dem Umgebungsboden der Fertigungslinie verankert. Auf einer dem Druckgehäuse abgewandten Seite des Rumpfes ist ein gemeinsamer Antrieb für beide Schneckenwellen vorgesehen, der durch einen Elektromotor mit einer einzigen Antriebswelle gebildet ist, welche beide Schneckenwellen über ein entsprechendes Getriebe simultan antreibt. Das Druckgehäuse hat zwei zylindrische Innenkanäle, in denen die Schneckenwellen mit entsprechendem zylindrischen Umfang aufgenommen sind. Die Innenkanäle gehen an der sich zugewandten Seite ineinander über, um gemeinsam eine Knetzone am schraubenartigen Eingriff der Schneckenwellen zu schaffen.

Um einen Durchsatz (in t/h) eines herkömmlichen Doppelschneckenextruders zu erhöhen, könnte der Umfangsquerschnitt der Schneckenwellen und somit der Innenkanäle des Druckgehäuses erhöht werden. Dieser plausiblen Maßnahme sind allerdings Grenzen auferlegt. Versuche zeigten, dass eine Zunahme der Breite des Extrudergehäuses nicht im gleichen Maß mit einer Zunahme der Breite eines dem Doppelschneckenextruder vorgeschalteten Vakuummischers einhergehen darf. Vielmehr muss die Breite des Vakuummischers deutlich stärker als die Breite des Doppelschneckenextruders zunehmen. Um eine ortssichere Zuleitung der Keramikausgangsmaterialien zu den Schneckenwellen zu gewährleisten, müssten bei übergroßen Mischern stark geneigte Trichterwände in den Rumpf eingezogen werden, um das Keramikausgangsmaterial auch an den in Breitenrichtung außenseitigen Stellen des Vakuummischers hin zu den Schneckenwellen hinleiten zu können. Ist die Neigung der Trichterwände zu groß, so bleibt Keramikausgangsmaterial an den geneigten Trichterflächen haften, was einen Materialfluss vom Vakuummischer hin zu den Schneckenwellen beeinträchtigt. Haftengebliebene Keramikmasse kann nach einer gewissen Zeit austrocknen und getrocknet zu den Schneckenwellen fallen, was die Qualität der Extrudiermasse beeinträchtigen kann. Ein qualitätsstabiler Extrusionsvorgang ist nur mit einem hohen Reinigungsaufwand möglich.

Der Materialdurchsatz (in t/h) von Einschneckenextrudern kann ebenfalls nicht ohne Weiteres erhöht werden. Konstruktive Zwänge setzen Grenzen bei der Dimensionierüng des Innenumfangsquerschnitts des Extrudergehäuses sowie des Umfangquerschnitts der Schneckenwellen.

Es ist Aufgabe der Erfindung, die Nachteile des Stands der Technik zu überwinden, insbesondere einen Doppelschneckenextruder dahingehend weiterzuentwickeln, dass höhere Durchsatzraten insbesondere von 100 t/h oder mehr erreicht werden.

Diese Aufgabe wird durch die Merkmale von Anspruch 1 gelöst. Danach ist ein Doppelschneckenextruder für keramische Masse mit einem Rumpf aufgebaut, der eine Einfüllöffnung zum Zuführen der zu extrudierenden Masse hin zu den Schneckenwellen definiert. Der Doppelschneckenextruder hat zwei drehbar gelagerte, insbesondere zueinander parallele Schneckenwellen und ein Extrudier- oder Druckgehäuse, das sich von dem Rumpf in Extrudierrichtung weg erstreckt, in einen Extrudierkopf zur Abgabe der extrudierten Masse mündet und einen mit der Einfüllöffnung in Verbindung stehenden Innenraum zur Aufnahme der Schneckenwellen begrenzt. Die Keramikmasse gelangt über die Einfüllöffnung in den Druckgehäuseinnenraum zum Mitteilen von Scherkräften und/oder zum Quetschen/Verdichten der zu extrudierenden Keramikmasse. Erfindungsgemäß ist der Innenraum des Druckgehäuses zumindest auf einem Teil der Erstreckung des Druckgehäuses in Extrudierrichtung in zwei separierte Extrudierabteile zur Aufnahme jeweils einer Schneckenwelle aufgeteilt, sodass zumindest längs der separaten, parallelen Extrudierabteile zwei separate Keramikmassenstränge gebildet sind, die sich im Verlauf der Kompressionsstrecke innerhalb der separaten Extrudierabteile nicht berühren oder vermengen können, weil sie in Radialrichtung längs der Kompressionsstrecke strukturell voneinander getrennt sind. Die erfindungsgemäße Maßnahme besteht darin, den Innenraum des Extrudiergehäuses zumindest teilweise in zwei voneinander getrennte, in Extrudierrichtung nebeneinander liegende Extrudierabteile aufzuteilen, sodass zumindest teilweise der Doppelschneckenextruder im Bereich des Extrudiergehäuses die Funktionsweise zweier parallelen Einzelschneckenextruder aufweist, die von ein und demselben Rumpf und vorgeschaltetem Vakuummischer mit keramischer Masse beschickt werden. Erfindungsgemäß kann sich Keramikmaterial der separaten Massenstränge nicht längs der voneinander getrennten Extrudierabteile miteinander vermischen.

Die Erfinder haben erkannt, dass eine einfache Vergrößerung von herkömmlichen Doppelschneckenextrudem, wie sie beispielsweise in DE 196 14 037 A1 bekannt sind, nicht ohne Weiteres möglich ist, nämlich nicht ohne die Ausgabequalität des extrudierten Keramikstranges erheblich zu beeinträchtigen. Versuche zeigten, dass sich bei Zunahme der Durchmesserdimensionen des Doppelschneckenextruders eine immer stärker werdende Dichtereduktion vor allem im Mittelbereich des extrudierten Stranges einstellt. Überraschenderweise entspricht der Mittelbereich des extrudierten Stranges geometrisch der Knetzone am Eingriffsbereich der beiden Schneckenwellen des herkömmlichen Doppelschneckenextruders gemäß DE 196 14 037 A1, an dem eigentlich der beste Druckwirkungsgrad feststellbar sein sollte. Aufgrund dieser inhomogenen Dichteverteilung in Breitenrichtung des extrudierten Keramikstrangs kann eine Fertigungslinie mit einem hohen Extrudierdurchsatz mit Hilfe des bekannten Doppelschneckenextruders nicht bereitgestellt werden. Hingegen kann die Erfindung das gewünschte homogene Extrudierergebnis in großen Mengen erreichen. Es zeigte sich unvorhergesehenerweise, dass die Aufteilung und Abtrennung des Innenraums des Druckgehäuses in zwei separate Extrudierabteile zur Aufnahme der Schneckenwellen einen in Breitenrichtung homogen dichten Extrudierstrang ermöglicht. Ein Durchsatz von extrudiertem Keramikmaterial von 100 t/h und sogar mehr kann erreicht werden, ohne einen Qualitätsverlust der extrudierten Masse durch Dichteänderung feststellen zu müssen.

Untersuchungen bei Schneckenextrudern zeigten, dass die Strömungsgeschwindigkeit der extrudierten Masse an den Strömungsrändern im Vergleich zum Strömungszentrum reibungsbedingt variieren, welches ungleichmäßiges Geschwindigkeitsprofil negative Auswirkungen auf eine homogene Materialstruktur des extrudierten Materials hat. Je größer die Schneckenextruder dimensioniert sind, desto stärker sind Geschwindigkeitsdifferenzen in Breitenrichtung der Extrudiermassenströmung ausgeprägt. Mit der Bereitstellung zweier separater (kleinerer) Extrudiermassenstränge durch zwei getrennte Extrudierabteile, ist es möglich, die (maximale) Strömungsgeschwindigkeitsdifferenz innerhalb eines Stranges zu reduzieren.

Bei einer bevorzugten Ausführung der Erfindung können statt zwei separater Extrudierabteile auch mehrere, insbesondere drei, vier, fünf nebeneinander liegende voneinander separierte Extrudierabteile innerhalb eines Druckgehäuses angeordnet sein, das von einem gemeinsamen Rumpf und einem gemeinsamen Vakuummischer mit Keramikmaterial versorgt wird.

Bei einer Weiterbildung der Erfindung können sich diese separaten Extrudierabteile zumindest bis hin zu einem stromabwertigen Ende des Druckgehäuses, an dem der Extrudierkopf angebracht ist, derart erstrecken, dass zwei voneinander getrennte Extrudiermassenstränge das Druckgehäuse verlassen würden, um jeweils zu einem Extrudierkopf mit mehreren Austrittsöffnungen zu gelangen. Dabei ist das Druckgehäuse derart definiert, dass es sich von einer Seitenwand des Rumpfes hin zum Extrudierkopf erstreckt, wobei der Extrudierkopfanfang als Ende des Druckgehäuses zu verstehen ist. Würde der Extrudierkopf nicht an dem Druckgehäuse montiert sein, würden tatsächlich zwei getrennte Extrudiermassenstränge das Extrudiergehäuse verlassen.

Vorzugsweise können sich die separaten Extrudierabteile zumindest unmittelbar von dem Rumpf aus in Extrudierrichtung weg insbesondere hin zu dem Extrudierkopf erstrecken.

Bei einer bevorzugten Ausführung der Erfindung sind die separaten Extrudierabteile auf dem größten Teil, insbesondere auf dem gesamten Teil, der Erstreckung des Druckgehäuses von dem Rumpf bis zum Extrudierkopf längs der Extrudierrichtung ausgebildet.

Bei einer bevorzugten Ausführung der Erfindung sind die Extrudierabteile jeweils durch einen insbesondere in Extrudierrichtung zylindrischen und/oder kegelförmigen Kanalabschnitt gebildet, der in dessen zur Extrudierrichtung definierten Umfangsrichtung vollständig geschlossen ist. Der Kanal kann teilweise zylindrisch und/oder teilweise kegelförmig ausgebildet sein, wobei sich der Umfangsquerschnitt der Schneckenwelle an dem Innenumfangsquerschnitt des Kanals in Extrudierrichtung angepasst ist, um kontinuierliche Knetzonenbereiche zwischen den Schneckenwellen und der umlaufenden Innenwandfläche der Extrudierabteile bereitzustellen.

Vorzugsweise definiert jeder umfänglich geschlossene Kanal eine Längsachse, insbesondere eine Rotationsachse, die mit einer Drehachse der jeweiligen Schneckenwelle zusammenfällt.

Bei einer Weiterbildung der Erfindung hat das Druckgehäuse zur Bildung der vollumfänglichen vollumlaufenden Innenwand der jeweiligen Extrudierabteile eine insbesondere im Wesentlichen vertikale Mittelwand zum Teilen des Innenraums des Extrudergehäuses. Die gemeinsame Mittelwand dient dazu, die Extrudierabteile in Radialrichtung vollständig voneinander strukturell zu trennen. Die Mittelwand ist vorzugsweise mit einem Decken- und Bodenabschnitt des Extrudergehäuses keramikmassendicht verbunden. Die Mittelwand bildet beidseitig abschnittsweise die Innenwand der Extrudierabteile.

Bei einer Weiterbildung der Erfindung ist das Druckgehäuse durch mehrere Gehäuseschalen gebildet, insbesondere durch eine Bodenschale zur Bildung des größten Teils des Gehäusebodens, zwei Seitenschalen und einer Deckenschale. Vorzugsweise sind die Seitenschalen an dem Rumpf derart angelenkt, dass sie voneinander weg insbesondere auf einer horizontalen Ebene relativ zum Rumpf aufschwenkbar sind, um einen Zugang ins Innere der Extrudierabteile zu schaffen. Für jede Seitenschale kann ein Schwenkgelenk eingesetzt werden, das eine Schwenkachse definiert, die sich in Vertikalrichtung erstreckt.

Vorzugsweise kann die Bodenschale an dem Rumpf befestigt sein. Dabei kann die Bodenschale unbeweglich an dem Rumpf befestigt sein, um eine ortsfeste Referenz für alle weiteren Schalen des Extrudiergehäuses bereitzustellen. Vorzugsweise ist eine im Wesentlichen vertikale Mittelwand, die den Innenraum des Druckgehäuses in die beiden voneinander getrennten Extrudierabteile unterteilt, durch die Bodenschale einerseits und durch die Deckenschale andererseits jeweils zur Hälfte strukturell gebildet.

Vorzugsweise kann jede Gehäuseschale eine Innenumfangsbegrenzung zumindest eines der Extrudierabteile definieren, beispielsweise können die Bodenschale und die Deckenschale jeweils ein zylindrisches und/oder kegelförmiges Viertel der Innenumfangsbegrenzung beider Extrudierabteile bilden, wobei jede Seitenschale eine Hälfte der Umfangsbegrenzung eines der Extrudierabteile festlegt.

Bei einer Weiterbildung der Erfindung sind die Gehäuseschalen zur Bildung einer Innenumfangsbegrenzung der Extrudierabteile durch eine Innenwand und durch mehrere sich quer zur Extrudierrichtung erstreckende, an einer Außenseite der Innenwand liegende Versteifungswände gebildet, die insbesondere sich zumindest teilweise ringförmig um die Innenwand herum erstrecken. Beim Montieren der Gehäuseschalen aneinander bilden die jeweiligen Innenwändegehäuseschalen die Struktureinheit der Extrudierabteile.

Vorzugsweise sind die Gehäuseschalen untereinander zur Bildung einer starren Gehäusestruktur verspannt.

Bei einer Weiterbildung der Erfindung ist innerhalb des Rumpfs mittig zwischen den beiden, sich zumindest teilweise durch den Rumpf erstreckenden Schneckenwellen eine insbesondere keilförmige Trennwand eingezogen, die sich von einem Boden des Rumpfs verjüngend zu einem Beschicker, insbesondere einem Vakuummischer der keramischen Masse erstreckt und die über die Einfüllöffnung zuzuführende Keramikmasse in zwei separate Massenströme auftrennt, die jeweils einer bestimmten Schneckenwelle zugeordnet sind.

Einer bevorzugten Ausführung der Erfindung ist ein Achsabstand zwischen der Drehachse und der Schneckenwellen größer als 800 mm und insbesondere kleiner als 1200 mm.

Bei einer Weiterbildung der Erfindung liegt ein kleinster Radialabstand zwischen benachbarten Begrenzungsinnenwänden der Extrudierabteile zwischen 150 mm und 550, vorzugsweise bei 350 mm.

Bei einer besonders bevorzugten Weiterbildung der Erfindung weist jede Schneckenwelle einen eigenen Antrieb auf, der unabhängig von einem anderen Antrieb der anderen Schneckenwelle ansteuerbar ist.

Weitere Eigenschaften, Vorteile und Merkmale der Erfindung werden durch die folgende Beschreibung einer bevorzugten Ausführung anhand der beiliegenden Zeichnungen deutlich, in denen zeigen:
- Figur 1: eine perspektivische Ansicht einer erfindungsgemäßen Doppelschneckenextru- deranordnung;
- Figur 2: eine perspektivische vergrößerte Ansicht der erfindungsgemäßen Dop- pelschneckenextruderanordnung, wobei das Druckgehäuse teilweise geöffnet ist;
- Figur 3: eine Seitenansicht der Doppelschneckenextruderanordnung gemäß Figur 2;
- Figur 4: eine Draufsicht der erfindungsgemäßen Doppelschneckenextruderanordnung gemäß Figuren 2 und 3;
- Figur 5: eine Draufsicht der erfindungsgemäßen Doppelschneckenextruderanordnung gemäß Figur 1;
- Figur 6: eine Querschnittsansicht der Doppelschneckenextruderanordnung gemäß der Schnittlinie VI-VI gemäß Figur 5;
- Figur 7: eine Querschnittsansicht des erfindungsgemäßen Druckgehäuses und
- Figur 8: eine Rückansicht des Druckgehäuses gemäß Figur 7.

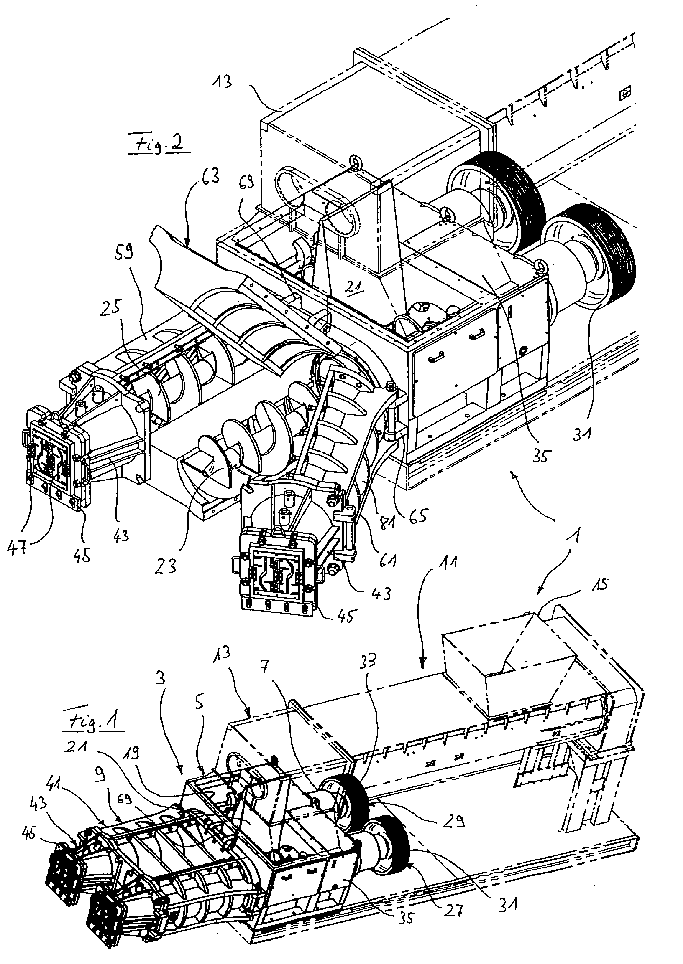

In den Figuren 1 bis 6 ist eine erfindungsgemäße Doppelschneckenextruderanordnung im Allgemeinen mit der Bezugsziffer 1 versehen. Die Doppelschneckenextruderanordnung umfasst einen Doppelschneckenextruder 3, der im Wesentlichen aus einem in Längsrichtung mittigen Rumpfabschnitt 5, einem Antriebsabschnitt 7 und einem Extrudierabschnitt 9 besteht.

Dem Doppelschneckenextruder 3 ist in Förderrichtung eine Transportbeschickungsvorrichtung 11 vorgeschaltet, die doppelschneckenextruderseitig mit einer Vakuumkammer 13 und einem Vormischer versehen ist. Die keramische Masse wird über einen Zuführtrichter 15 einer Transporteinrichtung (nicht näher dargestellt) zugeführt, die die keramische Masse in die Vakuumkammer 13 und hin zu dem Vormischer führt, die über einer Einfüllöffnung 19 des Rumpfabschnittes 5 angeordnet sind.

Im Inneren des Rumpfabschnittes 5 ist mittig eine keilförmige Trennwand 21 vorgesehen, welche den herabfallenden Strom aus baukeramischer Masse in zwei Teilströme aufteilt, die einer jeweiligen Schneckenwelle 23, 25 zugeordnet ist.

Die Schneckenwellen 23, 25 sind an entsprechend robust ausgebildeten Durchgängen in Stirnwänden des Rumpfabschnittes 5 drehbar gelagert, wobei auf der dem Extrudierabschnitt 9 abgewandten Seite des Rumpfabschnittes 5 jeweils ein individueller Antrieb 27, 29 für die Schneckenwellen 23, 25 vorgesehen ist. Die rückwärtig angeordneten Antriebe 27, 29 haben jeweils eine geschlossene Lagereinheit am Rumpfabschnitt 5, wobei für jede Schneckenwelle 23, 25 endseitig ein Keilriemenantriebsrad 31, 33 vorgesehen ist. Zwischen dem Keilriemenantriebsrad 31, 33 ist ein Haspelgetriebe (nicht dargestellt) in einem geschlossenen Getriebegehäuse 35 untergebracht, das mit Öl gefüllt ist. Ein Ölkreislauf ist für das Haspelgetriebe vorgesehen.

An der dem Extruderabschnitt 9 zugewandten Stirnwand des Rumpfabschnittes 5 erstreckt sich ein Druckgehäuse 41 weg und mündet jeweils in einen Press- oder Druckkopf 43 mit einem Mundstückträger 45, der zwei Austrittsöffnungen 47 aufweist. Das Druckgehäuse 41 begrenzt längs einer Kompressionsstrecke K einen Innenraum, der aus zwei voneinander getrennten Extrudierabteilen 51, 53 gebildet ist, ohne die Möglichkeit, keramische Masse untereinander austauschen zu können.

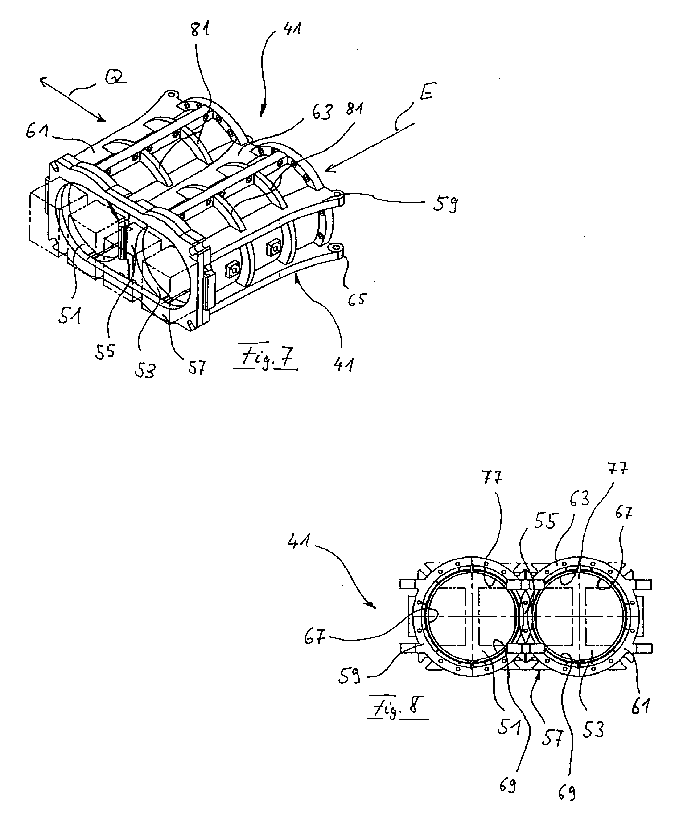

Wie in den Figuren 7 und 8 ersichtlich ist, sind die voneinander getrennten Extrudierabteile 51, 53 jeweils von einem vollzylindrischen und/oder vollkegelförmigen Innenwandabschnitt begrenzt, wobei ein innerer Mittelwandabschnitt 55 eine Vermengung der Extrudierstränge zur Extrudierrichtung E senkrechten Querrichtung verhindert.

Das Druckgehäuse 41 besteht aus mehreren Gehäuseschalen, nämlich einer Bodenschale 57, zwei Seitenschalen 59, 61 und einer Deckenschale 63, die aus zwei zueinander symmetrischen Einzelschalenteilen besteht.

Die Seitenschalen 59, 61 definieren jeweils eine halbzylindrische Innenumfangsfläche 67 eines Extruderabteils 51 oder 53. Die Bodenschale 57 definiert ein zylindrisches Viertel 69 der Innenumfangsfläche der Extruderabteile 51, 53. Gleiches (77) gilt für die Deckenschale 63, wobei die Deckenschale 63 und die Bodenschale zueinander teilweise den Mittelwandabschnitt 55 zum Trennen der Extrudierabteile 51, 53.

Wie in den Figuren 1 bis 7 ersichtlich ist, sind die Seitenschalen 59, 61 über ein Schwenkgelenk 65 an der dem Extruderabschnitt 9 zugewandten Stirnwand des Rumpfabschnitts 5 angelenkt. Das Schwenkgelenk 65 besteht aus einem Schwenkzapfen, der vertikal drehbar an zwei Flanschen gelagert ist und eine vertikale Schwenkachse definiert. Auf diese Weise werden die Seitenschale 59, 61 voneinander weg auf einer horizontalen Ebene aufgeschwenkt.

Wie in Figur 2 ersichtlich ist, sind die Pressköpfe 43 an dem vom Antriebsabschnitt 7 entfernten Ende der Seitenschalen 59, 61 verschraubt.

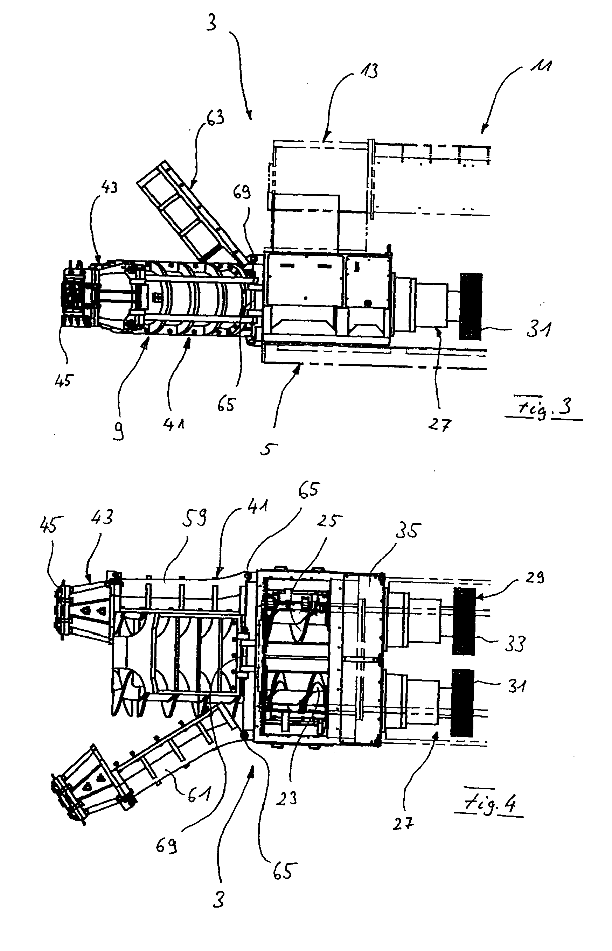

Auch die Deckelschale 63, die in Figur 2 nur abschnittsweise dargestellt ist, ist an die dem Extruderabschnitt 9 zugewandten Stirnseite des Rumpfabschnittes 5 über ein Schwenkgelenk 69 angelenkt, das einen horizontalen, drehbar gelagerten Schwenkzapfen aufweist, der sich quer, vorzugsweise senkrecht, zur Extrudierrichtung E erstreckt. Auf diese Weise kann die Deckelschale 63, wie in Figur 3 dargestellt ist, nach oben in einer vertikalen Ebene aufgeschwenkt werden, um einen gleichzeitigen Zugriff in das Innere der beiden Extruderteile 51, 53 zuzulassen, in denen sich die jeweiligen Schwenkwellen 23, 25 befinden.

Die Mittelwand 55, welche die Extrudierabteile 51, 53 in Querrichtung voneinander trennt, ist durch einen mittleren Teil der Bodenschale 57 und der Deckelschale 63 gebildet. Am besten ist die Zweiteilung der Innenwand 55 in Figur 2 ersichtlich, in der aber nur der untere Teil der Bodenschale 57 gezeigt ist.

Jede Schneckenwelle 23, 25 hat einen eigenen, individuell ansteuerbaren Antrieb, um auf unterschiedliche Betriebszustände der jeweiligen Extrudiersträngen in den Extruderabteilen 51, 53 reagieren zu können. Es zeigte sich, dass auch beim Versuch identischer Dimensionierung und Auslegung der Extruderabteile 51, 57 sowie der darin gelagerten Schneckenwellen 23, 25 nicht identische Betriebszustände und -lasten realisiert werden können. Mit der individualisierten Ansteuerung der Antriebe für die Schneckenwellen 23, 25 kann eine strukturelle und funktionelle Diskrepanz zwischen den beiden Extrudiersträngen kompensiert werden. Hierzu ist eine nicht näher dargestellte Steuerungs- und/oder Regelungseinrichtung vorgesehen, welche mit Sensoriken, insbesondere Drucksensoren, längs der jeweiligen Extrudierstränge versehen ist.

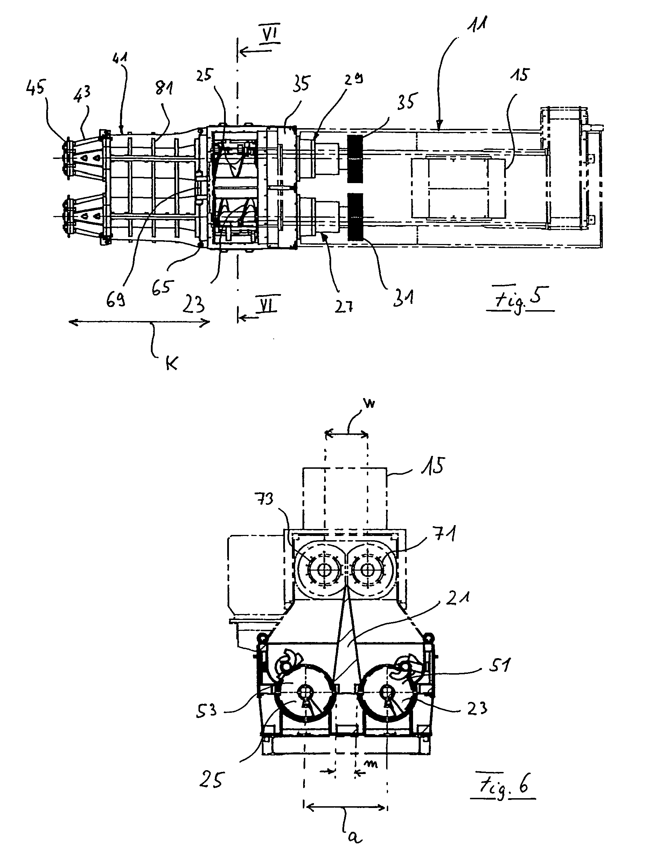

Wie in Figur 6 ersichtlich ist, ist der Axialabstand W von Mischerschnecken 71, 73 deutlich kleiner als der Axialabstand a zwischen den Schneckenwellen 23, 25. Auf diese Weise ist es möglich, Trichterwände, die erfindungsgemäß durch die keilförmige Trennwand 21 gebildet sind, mit möglichst geringfügigen Neigungswinkeln relativ zur Vertikalen auszubilden. Auf diese Weise ist gewährleistet, dass die vorgemischte keramische Masse nicht an den geneigten Trichterflächen haften bleibt.

Es ist die erfindungsgemäße Maßnahme, Extrudierabteile voneinander vollständig zu trennen, welches ermöglicht, den Achsabstand a zwischen den Schneckenwellen 23, 25 zu vergrößern. Vorzugsweise liegt dieser Axialabstand über 800 mm, wobei der Achsabstand natürlich davon abhängt, wie groß der Durchmesser der Schneckenwellen ist. Allerdings sei klar, dass der Mindestabstand M der benachbarten Innenwandbegrenzung der Extrudierabteile 51, 53 mindestens 150 mm sein soll.

Wie in den Figuren 7 und 8 ersichtlich ist, umfasst jede Gehäuseschale 57 bis 63 eine teilzylindrische Innenbegrenzungswand, welche zur Verstärkung der Gehäusestruktur mit teilweise ringförmigen Versteifungsstreben 81 außenseitig versehen ist, die sich quer zur Extrudierrichtung E erstrecken.

Die Gehäuseschalen 57 bis 63 sind miteinander durch Schraubverbindungen verspannt, um eine starre und robuste Gehäusestruktur zu ermöglichen.

Mit dem erfindungsgemäßen Doppelschneckenextruder 3 ist es möglich, das Geschwindigkeitsprofil eines Extrudierstranges in Radialrichtung Q deutlich zu glätten. Zum Anderen ist es möglich, hohe Extrudierdurchsätze zu erlangen, wobei ein im Hinblick auf die Dichte ein in sich homogenes Extrudiermaterial geschaffen ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Doppelschneckenextruderanordnung
- 3: Doppelschneckenextruder
- 5: Rumpf
- 7: Antriebsabschnitt
- 9: Extrudierabschnitt
- 11: Transportbeschickungsvorrichtung
- 13: Vakuumkammer
- 15: Zuführtrichter
- 19: Einfüllöffnung
- 21: Trennwand
- 23, 25: Schneckenwelle
- 27,29: Antrieb
- 31,33: Keilriemenantriebsrad
- 35: Getriebegehäuse
- 41: Druckgehäuse
- 43: Presskopf
- 45: Mundstückträger
- 47: Austrittsöffnung
- 51, 53: Extrudierabteil
- 55: Mittelwandabschnitt
- 57: Bodenschale
- 59, 61: Seitenschale
- 63: Deckenschale
- 65: Schwenkgelenk
- 67: eine Hälfte der Innenumfangsfläche
- 69, 77: ein Viertel der Innenumfangsfläche
- 71, 73: Vormischerrad
- 81: Versteifungsstreben
- Q: Querrichtung
- E: Extrudierrichtung
- A, w: Axialabstand
- K: Kompressionsstrecke

## Patentansprüche

1. Doppelschneckenextruder für keramische Masse mit einem Rumpf (5), der eine Einfüllöffnung (19) für die zu extrudierende Masse in den Doppelschneckenextruder definiert, zwei drehbar gelagerten, zueinander parallelen Schneckenwellen (23, 25) und einem Druckgehäuse (41), das sich von dem Rumpf in Extrudierrichtung (E) weg erstreckt, in einen Presskopf (43) zur Abgabe der Masse mündet und einen mit der Einfüllöffnung (19) in Verbindung stehenden Innenraum zur Aufnahme der Schneckenwellen (23, 25) begrenzt, wobei die Masse über die Einfüllöffnung (19) in den Innenraum gelangt, **dadurch gekennzeichnet, dass** der Innenraum zumindest auf einem Teil der Erstreckung des Druckgehäuses längs der Extrudierrichtung (E) in zwei separate Extrudierabteile (51, 53) zur Aufnahme jeweils einer Schneckenwelle (23, 25) aufgeteilt ist, so dass zumindest längs der separaten Extrudierabteile (51, 53) zwei separate Massenstränge gebildet sind.

2. Doppelschneckenextruder nach Anspruch 1, **dadurch gekennzeichnet, dass** sich die separaten Extrudierabteile zumindest bis hin zu einem stromabwärtigen Ende des Druckgehäuses (41), an dem der Presskopf (43) angebracht ist, derart erstrecken, dass zwei von einander getrennte Extrudiermassenstränge das Druckgehäuse (41) verlassen und zum Presskopf (43) gelangen.

3. Doppelschneckenextruder nach Anspruch 1 oder 2, **dadurch gekennzeichnet, dass** sich die separaten Extrudierabteile (51, 53) zumindest von dem Rumpf (5) aus in Extrudierrichtung (E) weg erstrecken,

4. Doppelschneckenextruder nach einem der vorgenannten Ansprüche, **dadurch gekennzeichnet, dass** die separaten Extrudierabteile (51, 53) auf dem größten Teil, insbesondere auf dem gesamten Teil, der Erstreckung des Druckgehäuses (41) von dem Rumpf (5) bis zum Presskopf (43) längs der Extrudierrichtung ausgebildet sind.

5. Doppelschneckenextruder nach einem der vorgenannten Ansprüche, **dadurch gekennzeichnet, dass** die Extrudierabteile (51, 53) jeweils durch einen insbesondere zylindrischen und/oder kegelförmigen Kanal gebildet sind, der in dessen zur Extrudierrichtung (E) definierten Umfangsrichtung vollständig geschlossen ist, wobei insbesondere jeder umfänglich geschlossene Kanal eine Längsachse, insbesondere eine Rotationsachse, definiert, die mit einer Drehachse der jeweiligen Schneckenwelle (23, 25) zusammenfällt.

6. Doppelschneckenextruder nach einem der vorgenannten Ansprüche, **dadurch gekennzeichnet, dass** das Druckgehäuse (41) zur Bildung der Extrudierabteile (51, 53) eine im wesentlichen vertikale Mittelwand (55) zum Teilen des Innenraums aufweist, die mit einem Decken- und Bodenabschnitt des Druckgehäuses (41) massendicht verbunden ist.

7. Doppelschneckenextruder nach einem der vorgenannten Ansprüche, **dadurch ge - kennzeichnet, dass** das Druckgehäuse (41) aus mehreren Gehäuseschalen (57-63) besteht, insbesondere einer Bodenschale (57) zur Bildung des größten Teils des Gehäusebodens, zwei Seitenschalen (59,61) und einer Deckenschale (63), wobei insbesondere die Seitenschalen (59,61) an dem Rumpf (5) derart angelenkt sind, dass sie von einander weg insbesondere auf einer horizontalen Ebene relativ zum Rumpf (5) aufschwenkbar sind, um eine Zugang zu den Extrudierabteilen (51,53) zu schaffen, und/oder wobei die Bodenschale (57) an dem Rumpf (5) befestigt ist.

8. Doppelschneckenextruder nach Anspruch 7, **dadurch gekennzeichnet, dass** eine im Wesentlichen vertikale Mittelwand (55) zum Aufteilen des Innenraums in die beiden Extrudierabteile (51, 53) durch die Bodenschale (57) und die Deckelschale (61) insbesondere jeweils zur Hälfte gebildet sind, und/oder jede Gehäuseschale (57-63) eine Innenumfangsbegrenzung zumindest eines der Extrudierabteile (51, 53) definiert.

9. Doppelschneckenextruder nach Anspruch 7 oder 8, **dadurch gekennzeichnet, dass** die Bodenschale (57) und die Deckelschale (61) jeweils ein zylindrisches und/oder kegelförmiges Viertel der Innenumfangsbegrenzung beider Extrudierabteile (51, 53) bildet, wobei jede Seitenschale (59, 61) eine Hälfe der Innenumfangsbegrenzung eines Extrudierabteils (51, 53) bildet.

10. Doppelschneckenextruder nach einem der Ansprüche 7 bis 9, **dadurch gekennzeichnet, dass** die Gehäuseschalen (57-61) zur Bildung einer Innenumfangsbegrenzung der Extrudierabteile Innenwand und mehrere sich quer zur Extrudierrichtung (E) erstreckende, an einer Außenseite der Innenwand liegende Versteifungen aufweist, die insbesondere sich zumindest teilweise ringförmig um die Innenwand herum erstrecken.

11. Doppelschneckenextruder nach einem der Ansprüche 7 bis 10, **dadurch gekennzeichnet, dass** die Gehäuseschalen (57-63) untereinander zur Bildung einer starren Gehäusestruktur miteinander verspannt sind.

12. Doppelschneckenextruder nach einem der Ansprüche 1 bis 11, **dadurch gekennzeichnet, dass** innerhalb des Rumpfs (5) mittig zwischen den beiden, sich zumindest teilweise durch den Rumpf (5) erstreckenden Schneckenwellen (23, 25) eine keilförmige Trennwand (21) eingezogen ist, die sich von einem Boden des Rumpf verjüngend zum einem Beschicker der keramischen Masse erstreckt und die über die Einfüllöffnung (19) zuzuführende Masse in zwei separate Massenströme auftrennt, von denen jeweils eine einer Schneckenwelle (23, 25) zugeordnet ist.

13. Doppelschneckenextruder nach einem der vorstehenden Ansprüche, **dadurch ge - kennzeichnet,** dass ein Achsabstand zwischen Drehachsen der Schneckenwellen (23, 25) größer als 800 mm ist und/oder ein Achsabstand zwischen Drehachsen der Schneckenwellen (23, 25) kleiner als 1200 mm ist.

14. Doppelschneckenextruder nach einem der vorstehenden Ansprüche, **dadurch gekennzeichnet, dass** ein kleinster Radialabstand m zwischen benachbarten Begrenzungsinnenwänden der Extrudierabteile zwischen 150 mm bis 550 mm, vorzugsweise bei 350 mm, liegt und/oder jede Schneckenwelle (23, 25) einen eigenen Antrieb aufweist, der unabhängig von einem Antrieb der anderen Schneckenwelle ansteuerbar ist.
